# EUROPÄISCHE PATENTANMELDUNG

(11) **EP 4 817 786 A1**
(43) Veröffentlichungstag der Anmeldung: **07.10.2026**
(21) Anmeldenummer: 26165602.9
(22) Anmeldetag: 17.03.2026
(51) Int. Cl.: B23P 11/02, B63H 23/32, B63H 23/36, F16C 33/06, F16C 33/08, F16C 33/20, F16C 33/74, F16C 43/02, B22F 7/06, B29C 65/44

(54) **RING- ODER ROHRFÖRMIGE KOMPONENTE UND VERFAHREN ZUR HERSTELLUNG EINER SOLCHEN**

(30) Priorität: 18.03.2025 DE 102025110277
(71) Anmelder: SKF Marine GmbH, 20457 Hamburg (DE)
(72) Erfinder: Chun, Jonas, 20255 Hamburg (DE)
(74) Vertreter: Kuhstrebe, Jochen

(57) **Zusammenfassung**

Offenbart ist ein Verfahren zur Herstellung einer ring- oder rohrförmigen Komponente (100). Dabei wird mittels additiver Fertigung eine Metallhülse (10) erzeugt, und ein Kunststoffrohrstücks (20) wird in die noch restwarme Metallhülse 10 eingebracht. Durch Abkühlenlassen und/oder sogar aktives Kühlen der Metallhülse (10) wird dann eine Presspassung des Kunststoffrohrstücks (20) bewirkt.

Weiterhin offenbart ist eine ring- oder rohrförmige Komponente (100), die eine Metallhülse 10 und ein darin zumindest mittels Presspassung fixiertes Kunststoffrohrstück (20) umfasst.

## Beschreibung

Die vorliegende Erfindung betrifft ein Verfahren zur Herstellung einer ring- oder rohrförmigen Komponente. Darüber hinaus betrifft die vorliegende Erfindung eine ring- oder rohrförmige Komponente.

Ring- oder rohrförmige Komponenten aus Kunststoff bieten gegenüber entsprechenden Komponenten aus Metall u.a. die Vorteile eines geringeren Gewichts sowie einer bedeutend vereinfachten Verfügbarkeit des Rohstoffs, was eine Reduktion an Arbeits- und Lageraufwand sowie finanzielle Einsparungen nach sich zieht. Eine Weiterverarbeitung solcher Komponenten aus Kunststoff beispielsweise mittels einer Drehmaschine ist jedoch insbesondere im Falle dünner Rohrwandungen oft problematisch, weil das Kunststoffmaterial bei einem vorteilhaft festen Einspannen deformiert wird. Im Falle besonders langer dünnwandiger Komponenten aus Kunststoff ist zudem ein präzises Einhalten der Maßvorgaben oft kaum möglich, insbesondere weil beim Vertikaldrehen schwingende Verbiegungen auftreten und beim Horizontaldrehen Deformationen in Innen- und Außendurchmesser entstehen.

Der vorliegenden Erfindung liegt die Aufgabe zugrunde, die oben genannten Nachteile zu beheben, insbesondere eine Verbesserung von ring- oder rohrförmigen Komponenten zu ermöglichen. Der Erfindung liegt ferner die Aufgabe zugrunde, verbesserte ring- oder rohrförmige Komponenten bereitzustellen.

Die Aufgaben werden gelöst durch ein Verfahren gemäß Anspruch 1 bzw. durch eine Komponente gemäß Anspruch 8. Vorteilhafte Ausführungsformen sind in den Unteransprüchen, der Beschreibung und den Zeichnungen offenbart.

Ein erfindungsgemäßes Verfahren dient der Herstellung einer ring- oder rohrförmigen Komponente. Dabei wird mittels additiver Fertigung eine Metallhülse erzeugt, und in das Innere der noch vom additiven Fertigungsprozess restwarmen Metallhülse (deren Temperatur also insbesondere höher ist als ihre Umgebungstemperatur) wird ein Kunststoffrohrstück eingebracht.

Bei diesem Einbringen werden die Metallhülse und das Kunststoffrohrstück also relativ zueinander bewegt; das Einbringen kann insbesondere ein Einschieben des Kunststoffrohrstücks in die Metallhülse und/oder ein Aufschieben der Metallhülse auf das Kunststoffrohrstück umfassen.

Durch (passives) Abkühlenlassen und/oder - ggf. im zeitlichen Wechsel - (aktives) Kühlen der Metallhülse wird gemäß dem erfindungsgemäßen Verfahren nach dem Einbringen eine Presspassung des Kunststoffrohrstücks in der Metallhülse bewirkt. Die Presspassung resultiert bei einem erfindungsgemäßen Verfahren somit aus einem Schrumpfen der Metallhülse bei ihrem Abkühlen, ein Außendurchmesser des Kunststoffrohrstücks entspricht also bereits beim Einbringen im Wesentlichen einem Innendurchmesser der Metallhülse.

Eine erfindungsgemäße Komponente ist ring- oder rohrförmig und umfasst eine Metallhülse und ein darin mittels Presspassung fixiertes Kunststoffrohrstück. Die ring- oder rohrförmige Komponente kann insbesondere mittels einer Ausführungsform eines erfindungsgemäßen Verfahrens hergestellt sein.

Eine in Richtung seiner zentralen Achse gemessene Länge des Kunststoffrohrstücks kann beim erfindungsgemäßen Verfahren bzw. bei einer erfindungsgemäßen Komponente kleiner sein als sein radial zur zentralen Achse gemessener Außendurchmesser, so dass das Kunststoffrohrstück als ringförmig zu bezeichnen ist. Alternativ kann die genannte Länge mindestens so groß sein wie der genannte Außendurchmesser, so dass das Kunststoffrohrstück (ungeachtet der hier gewählten Bezeichnung als "Stück") als rohrförmig anzusehen ist. Entsprechendes gilt für die Metallhülse und die Komponente insgesamt.

Insbesondere ist bzw. wird die ring- oder rohrförmige Komponente vorzugsweise rotationssymmetrisch um ihre zentrale Achse ausgebildet.

Die Metallhülse der mittels eines erfindungsgemäßen Verfahrens hergestellten Komponente bzw. der erfindungsgemäßen Komponente stabilisiert vorteilhaft das darin eingefasste Kunststoffrohrstück. Damit können unerwünschte Verformungen oder Vibrationen bei der Einspannung der Komponente in eine Maschine (z.B. in eine horizontale oder vertikale Drehmaschine) vermieden oder zumindest reduziert werden. Umgekehrt stabilisiert auch das Kunststoffrohrstück die vorzugsweise dünnwandige Metallhülse und ermöglicht damit vorteilhaft deren Zerspanung auch bei sehr engen Toleranzen.

Die vorliegende Erfindung erlaubt zudem, die aus der Metallhülse und dem Kunststoffrohrstück zusammen gebildete Wandung der Komponente besonders dünn auszubilden und dabei gleichwohl eine präzise weitere Verarbeitung zu ermöglichen. Durch die Presspassung des Kunststoffrohrstücks in der Metallhülse kann vorteilhaft auf spezielle separate Verbindungsmittel wie Kleber, Schrauben oder Nieten verzichtet werden.

Darüber hinaus ermöglicht die Ummantelung des Kunststoffrohrstücks durch die Metallhülse vorteilhaft ein einfaches Verbinden mehrerer der ring- oder rohrförmigen Komponenten (insbesondere zur Herstellung beliebig langer Rohre): Dazu kann an mindestens einer der mehreren Komponenten im Verbindungsbereich eine Taschenkontur erzeugt werden, in die dann eine andere der Komponenten eingesteckt werden kann; die Verbindung kann dann zusätzlich mittels von außen (radial) eingebrachter Schrauben fixiert werden kann. Demgegenüber sind herkömmliche reine ring- oder rohrförmige Kunststoffkomponenten aufgrund ihrer Elastizität oft schwer ohne thermischen Prozess (bspw. Reibschweißen) zu verbinden.

Die benötigte Wärme wird bei dem erfindungsgemäßen Verfahren durch die Restwärme der additiven Fertigung gestellt, bei der das Metall sukzessive aufgeschmolzen wird. Ein erneutes Aufheizen der Komponente ist damit für das Anschrumpfen unnötig, was eine Einsparung von Energie und Herstellungsaufwand bedeutet.

Insbesondere weist die Metallhülse beim Einbringen des Kunststoffrohrstücks in ihr Inneres vorzugsweise eine Temperatur auf, die mindestens so hoch ist wie eine Schmelztemperatur des Kunststoffrohrstücks (also dessen Materials). Auf diese Weise wird das Kunststoffrohrstück beim Anschrumpfen angeschmolzen, so dass mit dem Abkühlen ein Klebeeffekt zwischen Metallhülse und Kunststoffrohrstück erzielt und die Komponente somit besonders haltbar wird.

Gemäß vorteilhaften Ausführungsformen wird die Metallhülse bei ihrer additiven Fertigung mit einer Vielzahl von Unebenheiten zumindest in ihrer Innenfläche erzeugt. Die Unebenheiten bewirken beim Anschrumpfen eine mechanische Verbindung mit dem Kunststoffrohrstück, die damit weiter verfestigt wird. Insbesondere in Ausführungsformen, bei denen zudem die Temperatur der Metallhülse beim Einbringen des Kunststoffrohrstücks wie erwähnt oberhalb dessen Schmelztemperatur liegt, kann so ein Eingreifen der unebenen inneren Oberfläche der Metallhülse und der äußeren Oberfläche des Kunststoffrohrstücks ineinander bewirkt werden, was eine besonders stabile mechanische Verbindung gewährleistet.

Das Kunststoffrohrstück einer erfindungsgemäßen ring- oder rohrförmigen Komponente bzw. das bei einem erfindungsgemäßen Verfahren in die Metallhülse eingebrachte Kunststoffrohrstück kann insbesondere mindestens teilweise aus einem Duroplast oder einem Thermoplast wie beispielsweise thermoplastischem Polyurethan (TPU) bestehen. Es kann vorzugsweise mittels Spritzgusses gefertigt sein; das erfindungsgemäße Verfahren kann ein solches Fertigen des Kunststoffrohrstücks mittels Spritzgusses umfassen. Die Verbindung mittels Presspassung erlaubt dabei insbesondere, auf ein Entfernen eines Trennmittels, das der Ablösung des Kunststoffrohrstücks von seiner Gussform dient, vor dem Einbringen des Kunststoffrohrstücks in die Metallhülse zu verzichten. Dies bedeutet eine Reduktion an Arbeitsaufwand.

Vorzugsweise stimmen die in Richtung der jeweiligen zentralen Achsen gemessenen Längen von Kunststoffrohrstück und Metallhülse der erfindungsgemäßen bzw. mittels eines erfindungsgemäßen Verfahrens erzeugten Komponente im Wesentlichen überein; insbesondere beträgt die Länge der Metallhülse vorzugsweise mindestens 90% oder mindestens 95% der Länge des Kunststoffrohrstücks und/oder beträgt umgekehrt die Länge des Kunststoffrohrstücks mindestens 90% oder mindestens 95% der Länge der Metallhülse. Das Verfahren kann ein Einkürzen der Metallhülse oder des Kunststoffrohrstücks nach dem Einbringen oder sogar nach dem Bewirken der Presspassung auf derartige Längenverhältnisse umfassen.

Ein senkrecht zu seiner zentralen Achse gemessener (durchgehender oder mittlerer) Außendurchmesser der Komponente kann mindestens 8cm oder mindestens 9cm betragen und/oder höchstens 50cm, höchstens 25cm oder höchstens 12cm. In alternativen Ausführungsformen kann ein solcher (durchgehender oder mittlerer) Außendurchmesser der Komponente mindestens 50cm, mindestens 90cm oder mindestens 120cm betragen und/oder höchstens 170cm oder höchstens 160cm. Bei der Herstellung der Komponente wird also die Metallhülse jeweils mit einem entsprechenden Außendurchmesser erzeugt.

Die ring- oder rohrförmige Komponente kann insbesondere eine Stevenrohrlaufbuchse eines Wasserfahrzeugs oder eine Laufbuchse für eine Abdichtung (die ebenfalls zu einem Wasserfahrzeug gehören kann) sein.

Im Folgenden wird die vorliegende Erfindung anhand von Zeichnungen näher erläutert. Bezugszeichen für einander entsprechende Elemente sind dabei figurenübergreifend verwendet und werden ggf. nicht für jede Figur neu beschrieben.

Es illustrieren schematisch:

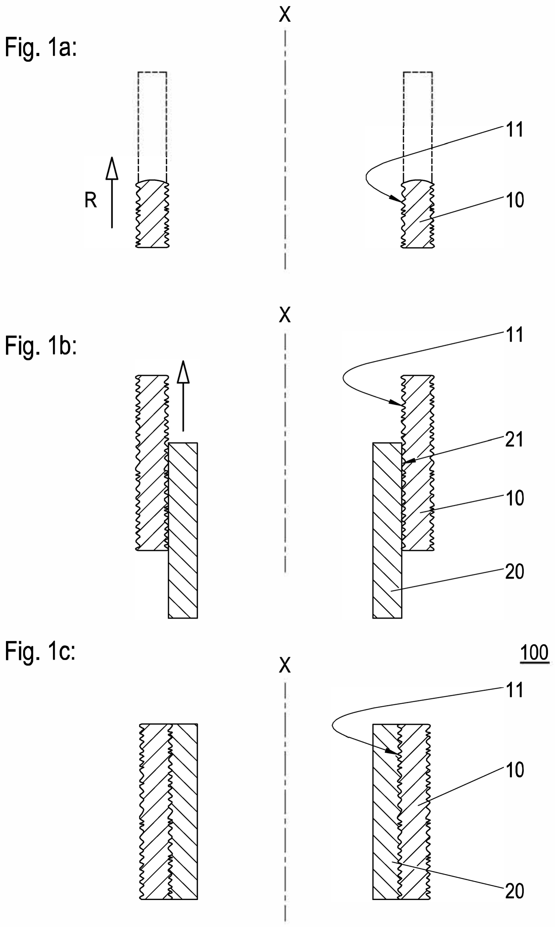

- Fig. 1a:: das Erzeugen einer exemplarischen Metallhülse mittels additiver Fertigung als einen Schritt eines erfindungsgemäßen Verfahrens;
- Fig. 1b:: das Einbringen eines exemplarischen Kunststoffrohrstücks in die noch restwarme Metallhülse als weiteren Schritt des erfindungsgemäßen Verfahrens; und
- Fig. 1c:: die hergestellte ring- oder rohrförmige Komponente nach dem Bewirken einer Presspassung im Wege des erfindungsgemäßen Verfahrens.

Die Figur 1a illustriert, wie entsprechend einem Schritt eines erfindungsgemäßen Verfahrens entsprechend eine Metallhülse 10 additiv in eine Aufbaurichtung R gefertigt wird; mit gestrichelten Linien ist die fertige Metallhülse angedeutet. Die Metallhülse 10 ist dabei in einer Schnittansicht längs ihrer zentralen Achse X gezeigt.

Wie in der Figur 1a ersichtlich, entstehen bei der additiven Fertigung eine Vielzahl von Unebenheiten insbesondere an einer inneren Oberfläche 11 der Metallhülse.

In einem weiteren Schritt des erfindungsgemäßen Verfahrens wird ein Kunststoffrohrstück 20 in die Metallhülse 10 eingebracht. Dies ist in der Figur 1b in einer entsprechenden Schnittansicht verdeutlicht, wobei vorliegend das Kunststoffrohrstück 20 in Pfeilrichtung in das Innere der Metallhülse eingeschoben wird. Es versteht sich, dass alternativ oder zusätzlich die Metallhülse 10 entgegengesetzt der Pfeilrichtung bewegt und auf das Kunststoffrohrstück 20 geschoben werden könnte (nicht dargestellt).

Wie aus der Figur 1b ersichtlich, liegen die Innenfläche 11 der Metallhülse und eine Außenfläche 21 des Kunststoffrohrstücks 20 nach dem Einbringen (und vor dem Abkühlen der Metallhülse) in umlaufendem Kontakt, aber noch gegeneinander verschieblich aneinander an.

Infolge der noch von der additiven Fertigung resultierenden Restwärme weist die Metallhülse 10 vorliegend beim Einbringen des Kunststoffrohrstücks 20 eine Temperatur auf, die mindestens so hoch ist wie eine Schmelztemperatur des Kunststoffrohrstücks (bzw. seines Materials). So wird das eingebrachte Kunststoffrohrstück 20 im Bereich seiner Außenfläche 21 angeschmolzen, also aufgeweicht (nicht sichtbar). Alternativ oder zusätzlich könnte die Metallhülse zum Aufweichen des Kunststoffs auch extern aufgeheizt werden, beispielsweise mittels Induktionsschleifen oder einem Ofen.

Nach dem Einbringen wird die Metallhülse 10 erfindungsgemäß abkühlen gelassen und/oder aktiv gekühlt und so eine Presspassung des Kunststoffrohrstücks 20 in der Metallhülse 10 bewirkt. Die Figur 1c zeigt die dadurch entstandene exemplarische erfindungsgemäße ring- oder rohrförmige Komponente 100, bei der sich die Unebenheiten in der Innenfläche 11 der Metallhülse 10 aufgrund des Schrumpfdrucks und infolge der Aufgeweichung/ Aufschmelzung der Außenfläche 21 des Kunststoffrohrstücks in diese eingeprägt haben. Die Metallhülse 10 und das Kunststoffrohrstück 20 sind dadurch besonders solide sowohl durch die aus dem Schrumpfprozess resultierende Pressverbindung als auch mechanisch durch die ineinander eingreifenden Oberflächen 11, 21 miteinander verbunden.

Offenbart ist ein Verfahren zur Herstellung einer ring- oder rohrförmigen Komponente 100. Dabei wird mittels additiver Fertigung eine Metallhülse 10 erzeugt, und ein Kunststoffrohrstücks 20 wird in die noch restwarme Metallhülse 10 eingebracht. Durch Abkühlenlassen und/oder sogar aktives Kühlen der Metallhülse 10 wird dann eine Presspassung des Kunststoffrohrstücks 20 bewirkt.

Weiterhin offenbart ist eine ring- oder rohrförmige Komponente 100, die eine Metallhülse 10 und ein darin zumindest mittels Presspassung fixiertes Kunststoffrohrstück 20 umfasst.

### Bezugszeichen

- 10: Metallhülse
- 11: Innenfläche der Metallhülse

- 20: Kunststoffrohrstück
- 21: Außenfläche des Kunststoffrohrstücks

- 100: ring- oder rohrförmige Komponente

- R: Aufbaurichtung bei der additiven Fertigung
- X: zentrale Achse

## Patentansprüche

1. Verfahren zur Herstellung einer ring- oder rohrförmigen Komponente (100), das umfasst:
- Erzeugen einer Metallhülse (10) mittels additiver Fertigung,
- Einbringen eines Kunststoffrohrstücks (20) in die noch restwarme Metallhülse (10) und
- Bewirken einer Presspassung des Kunststoffrohrstücks (20) in der Metallhülse (10) durch Kühlen und/oder Abkühlenlassen der Metallhülse (10).

2. Verfahren gemäß Anspruch 1, wobei die Metallhülse (10) beim Einbringen des Kunststoffrohrstücks (20) eine Temperatur aufweist, die mindestens so hoch ist wie eine Schmelztemperatur des Kunststoffrohrstücks (20).

3. Verfahren gemäß einem der Ansprüche 1 oder 2, wobei die Metallhülse (10) mit einer Vielzahl von Unebenheiten zumindest an ihrer Innenfläche (11) erzeugt wird.

4. Verfahren gemäß einem der vorhergehenden Ansprüche, wobei das Kunststoffrohrstück (20) zumindest zum Teil aus einem Thermoplast, insbesondere thermoplastischem Polyurethan besteht.

5. Verfahren gemäß einem der vorhergehenden Ansprüche, wobei die ring- oder rohrförmige Komponente (100) in mindestens einem Abschnitt einen konstanten oder mittleren Außendurchmesser aufweist, der
- mindestens 8cm oder mindestens 9cm und/oder
- höchstens 50cm, höchstens 25cm oder höchstens 12cm beträgt.

6. Verfahren gemäß einem Ansprüche 1 bis 4, wobei die ring- oder rohrförmige Komponente (100) in mindestens einem Abschnitt eine konstanten oder mittleren Außendurchmesser aufweist, der
- mindestens 50cm, mindestens 90cm oder mindestens 120cm und/oder
- höchstens 170cm oder höchstens 160cm beträgt.

7. Verfahren gemäß einem der vorhergehenden Ansprüche, wobei als die ring- oder rohrförmige Komponente (100) eine Stevenrohrlaufbuchse eines Wasserfahrzeugs oder eine Laufbuchse für eine Abdichtung hergestellt wird.

8. Komponente (100), die ring- oder rohrförmig ausgebildet ist und eine Metallhülse (10) und ein darin zumindest mittels Presspassung fixiertes Kunststoffrohrstück (20) umfasst.

9. Komponente gemäß Anspruch 8, wobei das Kunststoffrohrstück (20) zudem mechanisch in der Metallhülse (10) fixiert ist, indem eine Außenfläche (21) des Kunststoffrohrstücks und eine unebene Innenfläche (10) der Metallhülse (10) ineinander eingreifen.

10. Komponente gemäß einem der Ansprüche 8 oder 9, die als eine Stevenrohrlaufbuchse eines Wasserfahrzeugs oder als eine Laufbuchse für eine Abdichtung ausgebildet ist.
